# EUROPEAN PATENT APPLICATION

(11) **EP 4 675 816 A1**
(43) Date of publication of application: **07.01.2026**
(21) Application number: 24899089.7
(22) Date of filing: 19.03.2024
(51) Int. Cl.: H01M 50/367

(54) **BATTERY AND ELECTRIC DEVICE**

(30) Priority: 04.12.2023 CN 202311640993
(71) Applicant: Contemporary Amperex Technology Co., Ltd., Ningde, Fujian 352100 (CN)
(72) Inventor: WU, Kai, Ningde, Fujian 352100 (CN); WANG, Yong, Ningde, Fujian 352100 (CN); YI, Xiaojiao, Ningde, Fujian 352100 (CN); WANG, Qing, Ningde, Fujian 352100 (CN)
(74) Representative: Lorenz Seidler Gossel Part. mbB
(86) International application number: PCT/CN2024/082439
(87) International publication number: WO 2025/118435

(57) **Abstract**

The present application provides a battery and an electric apparatus. The battery includes a casing and a battery cell, the casing is provided with an exhaust hole penetrating the casing along a thickness direction of the casing, and the battery cell is accommodated in the casing. The battery cell includes a housing, and a first pressure relief mechanism and two electrodes that are provided on the housing, where the first pressure relief mechanism in an open state communicates the exhaust hole with an interior of the housing, and at least one of the two electrodes and the first pressure relief mechanism are provided on a same side of the housing. The exhaust hole penetrates the casing along the thickness direction of the casing, and the first pressure relief mechanism in the open state communicates the exhaust hole with the exhaust hole with the interior of the housing, such that gas discharged from the first pressure relief mechanism is expelled from the casing through the exhaust hole. This utilizes the external space of the casing to cool and depressurize the gas, reducing or eliminating the risk of gas explosion inside the casing, thereby helping to improve the safety performance of the battery.

## Description

The present application claims priority to Chinese Patent Application No. 202311640993.4, filed on December 4, 2023 and entitled "BATTERY AND ELECTRIC APPARATUS," the entire contents of which are incorporated herein by reference.

### TECHNICAL FIELD

The present application pertains to the field of new energy technologies, and more particularly, relates to a battery and an electric apparatus.

### BACKGROUND

Generally, a casing provides a space for accommodating battery cells, with a cavity provided in a casing wall of the casing. When a battery cell undergoes thermal runaway, gas inside the battery cell is directed to the accommodation space or the cavity through an explosion-proof valve.

Both the accommodation space and the cavity are part of an internal space of the casing, and the internal space has a limited volume, resulting in a limited effect on cooling and depressurizing the gas. Consequently, the risk of short-circuit faults in the battery increases, which is not conducive to improving the safety performance of the battery.

### TECHNICAL PROBLEM

The purpose of embodiments of the present application is to provide a battery and an electric apparatus to address the technical problem that directing gas to internal spaces of casings in existing batteries is likely lead to safety hazards.

### TECHNICAL SOLUTION

To address the above technical problem, the technical solution adopted by embodiments of the present application is as follows:

According to a first aspect, a battery is provided, where the battery includes a casing and a battery cell, the casing is provided with an exhaust hole penetrating the casing along a thickness direction of the casing, and the battery cell is accommodated in the casing; and
the battery cell includes a housing, and a first pressure relief mechanism and two electrodes that are provided on the housing, where the first pressure relief mechanism in an open state communicates the exhaust hole with an interior of the housing, and at least one of the two electrodes and the first pressure relief mechanism are provided on a same side of the housing.

In some embodiments, the battery further includes a separating member, where the separating member is connected between the casing and the battery cell, one side of the separating member is separated from the other side opposite the one side, the first pressure relief mechanism and the exhaust hole are provided on the one side, and the electrode located on the same side as the first pressure relief mechanism is provided on the other side.

The separating member separates the first pressure relief mechanism from the electrode, as well as the exhaust hole from the electrode, separating a path of gas discharged from the first pressure relief mechanism to the exhaust hole from the electrode, thereby preventing the gas from adversely affecting the electrode and its insulation design.

In some embodiments, the first pressure relief mechanism and the two electrodes are provided on the same side of the housing, the first pressure relief mechanism is provided between the two electrodes, the separating member is provided between the first pressure relief mechanism and one of the electrodes, and the separating member is provided between the first pressure relief mechanism and the other electrode.

When the first pressure relief mechanism and the two electrodes are provided on the same side of the housing, one separating member separates one electrode from the first pressure relief mechanism, and another separating member separates the other electrode from the first pressure relief mechanism, such that the two electrodes are separately separated, and the path of gas discharged from the first pressure relief mechanism to the exhaust hole is separated from either electrode, preventing the gas from adversely affecting either electrode or its insulation design.

In some embodiments, the first pressure relief mechanism is provided at a central position between the two electrodes.

The first pressure relief mechanism is equidistant from the two electrodes, providing sufficient spacing between the first pressure relief mechanism and either electrode, which facilitates the placement of the separating member between the first pressure relief mechanism and either electrode.

In some embodiments, the first pressure relief mechanism is proximate to one of the electrodes and distant from the other electrode.

This provides an alternative arrangement for the first pressure relief mechanism, suitable for the arrangement requirement that the distance between one electrode and the first pressure relief mechanism needs to be greater than the distance between the other electrode and the first pressure relief mechanism.

In some embodiments, the first pressure relief mechanism and the two electrodes are provided on the same side of the housing, the first pressure relief mechanism and the two electrodes are sequentially arranged, and the separating member is provided between the first pressure relief mechanism and the electrode adjacent thereto.

This provides another arrangement for the first pressure relief mechanism, suitable for the arrangement requirement that the first pressure relief mechanism is provided on an edge side of the battery cell, while the two electrodes are provided on another edge side or a middle region.

In some embodiments, the battery includes a plurality of battery cells, the plurality of battery cells are stacked along a first direction, and any two adjacent battery cells are disposed opposite along a second direction, where the first direction is perpendicular to the second direction.

The opposite placement of any two adjacent battery cells along the second direction can form two groups of first pressure relief mechanisms spaced apart along the second direction, each group including a plurality of first pressure relief mechanisms arranged along the first direction, facilitating the layout design of the first pressure relief mechanisms based on the internal space of the battery.

In some embodiments, the battery includes a plurality of battery cells, the plurality of battery cells are stacked along a first direction, and any two adjacent battery cells are identically placed along a second direction, where the first direction is perpendicular to the second direction.

The identical placement of any two adjacent battery cells along the second direction can form a group of first pressure relief mechanisms arranged along the first direction, facilitating the layout design of the first pressure relief mechanisms based on the internal space of the battery.

In some embodiments, the battery includes a plurality of battery cells, the plurality of battery cells are stacked along a first direction; the separating member extends along the first direction, and the separating member is connected to the plurality of battery cells.

The plurality of battery cells achieve separation of a group of first pressure relief mechanisms and exhaust holes from the electrodes through a single separating member, simplifying the internal structure of the battery.

In some embodiments, a spacing distance between the separating member and the electrode adjacent thereto is greater than or equal to 35 mm; and
a size of the separating member in a direction from the separating member to the electrode adjacent thereto is greater than or equal to 4 mm and less than or equal to the spacing distance between the separating member and the electrode adjacent thereto.

In the direction from the separating member to the electrode adjacent thereto, the size of the separating member is greater than or equal to 4 mm and less than or equal to the spacing distance between the separating member and the electrode adjacent thereto, enabling separation while enhancing the connection strength between the separating member, the casing, and the battery cell.

In some embodiments, a size of the separating member in a direction from the casing toward the battery cell is greater than or equal to 0.3 mm.

In the direction from the casing toward the battery cell, the size of the separating member is greater than or equal to 0.3 mm, enabling separation while enhancing the connection strength between the separating member, the casing, and the battery cell.

In some embodiments, the casing is provided with a channel structure, the channel structure and the first pressure relief mechanism are provided on two sides of the exhaust hole along an axial direction thereof, and the exhaust hole is in communication with the channel structure.

The channel structure guides the gas to be directionally discharged from the casing, facilitating directional control of the gas, reducing the likelihood of safety hazards, and minimizing the number of paths for gas discharge from the casing, thereby simplifying the structural design of the casing.

In some embodiments, the casing is provided with a second pressure relief mechanism, the second pressure relief mechanism is provided at an end of the channel structure distant from the exhaust hole, and the second pressure relief mechanism in an open state communicates the channel structure with an exterior of the casing.

Providing the second pressure relief mechanism at the end of the channel structure facilitates directional gas discharge, reducing the likelihood of safety hazards.

In some embodiments, the battery includes a plurality of battery cells stacked along the first direction, the casing is provided with a plurality of the exhaust holes arranged along the first direction, the plurality of exhaust holes each are in communication with the channel structure, and the first pressure relief mechanisms are provided in one-to-one correspondence to the exhaust holes.

In the case where the battery includes a plurality of battery cells, providing a plurality of exhaust holes, with an arrangement direction of the plurality of exhaust holes consistent with that of the plurality of battery cells, enables exhaustion for the plurality of battery cells.

In some embodiments, the battery includes a plurality of battery cells stacked along a first direction, the exhaust hole extends along the first direction, the plurality of first pressure relief mechanisms of the plurality of battery cells are provided within a projection of the exhaust hole along its axial direction, and the first direction is perpendicular to the axial direction.

In the case where the battery includes a plurality of battery cells, aligning the extension direction of the exhaust hole with the arrangement direction of the plurality of battery cells enables exhaustion for the plurality of battery cells.

In some embodiments, the channel structure includes a first channel, the first channel extends along a first direction, and the exhaust hole communicates the first channel with the first pressure relief mechanism.

The first channel converges gas from the exhaust hole and guides the gas to be directionally discharged from the casing, facilitating directional control of the gas, reducing the likelihood of safety hazards, and minimizing the number of paths for gas discharge from the casing, thereby simplifying the structural design of the casing.

In some embodiments, the battery includes a plurality of battery groups arranged along a second direction, each battery group includes a plurality of battery cells, and the first direction is perpendicular to the second direction, the channel structure includes a plurality of the first channels, and the first channels are provided in one-to-one correspondence to the battery groups.

In the case where a plurality of battery groups are provided, providing a plurality of first channels, where one first channel can converge gas discharged from a plurality of valves of a plurality of battery cells in one battery group, enables exhaustion for the plurality of battery groups.

In some embodiments, the channel structure includes a second channel, the second channel extends along the second direction, and the plurality of first channels all are in communication with the second channel.

The second channel converges gas from the plurality of first channels and guides the gas to be directionally discharged from the casing, facilitating directional control of the gas, reducing the likelihood of safety hazards, and minimizing the number of paths for gas discharge from the casing, thereby simplifying the structural design of the casing.

In some embodiments, the channel structure includes a third channel, the extension direction of the third channel is consistent with the axial direction of the exhaust hole, an end of the third channel distant from the second channel is provided with a second pressure relief mechanism; and the second pressure relief mechanism and the first pressure relief mechanism are provided on the same side of the exhaust hole.

The third channel extends along the axial direction of the exhaust hole, allowing the second pressure relief mechanism and the first pressure relief mechanism to be provided on the same side of the exhaust hole, such that the provision of the second pressure relief mechanism does not increase the size of the casing along the axial direction of the exhaust hole, thereby not increasing the occupied volume of the casing.

In some embodiments, the casing includes a main casing and a cover, the cover includes a main cover member and a sub-cover member;

The main cover member is provided on the main casing, the main cover member and the main casing together define a space for accommodating the battery cell, and the exhaust hole and the third channel are provided on the main cover member;

The sub-cover member is provided on a side of the main cover member facing away from the main casing, and the sub-cover member and the main cover member together define the first channel and the second channel.

The first channel, the second channel, and the third channel are designed using the main casing and cover inherent to the casing, simplifying the structural design of the casing.

According to a second aspect, an electric apparatus is provided, where the electric apparatus includes the battery as described above.

The beneficial effect of the battery provided by the embodiments of the present application is that: in the battery provided by this technical solution, the exhaust hole penetrates the casing along the thickness direction of the casing, the first pressure relief mechanism in the open state is in communication with the exhaust hole, and gas discharged from the first pressure relief mechanism is expelled from the casing through the exhaust hole. This utilizes the external space of the casing to cool and depressurize the gas, reducing or eliminating the risk of gas explosion inside the casing, thereby helping to improve the safety performance of the battery.

The beneficial effect of the electric apparatus provided by the embodiments of the present application is that: the electric apparatus provided by this technical solution employs the battery provided by the above technical solution. In the battery provided by the above technical solution, the exhaust hole penetrates the casing along the thickness direction of the casing, the first pressure relief mechanism in an open state is in communication with the exhaust hole, and gas discharged from the first pressure relief mechanism is expelled from the casing through the exhaust hole. This utilizes the external space of the casing to cool and depressurize the gas, reducing or eliminating the risk of gas explosion inside the casing, thereby helping to improve the safety performance of the electric apparatus.

### BRIEF DESCRIPTION OF DRAWINGS

To more clearly illustrate the technical solutions in the embodiments of the present application, the drawings required for use in the description of the embodiments or the prior art are briefly introduced below. It is apparent that the drawings described below are only some embodiments of the present application, and those of ordinary skill in the art can obtain other drawings based on these drawings without creative effort.
FIG. 1 is a schematic structural diagram of an electric apparatus provided by some embodiments of the present application;
FIG. 2 is a schematic structural diagram of a battery provided by some embodiments of the present application;
FIG. 3 is an exploded view of a battery provided by some embodiments of the present application;
FIG. 4 is a schematic structural diagram of a battery provided by some embodiments of the present application, with a cover portion removed;
FIG. 5 is a schematic structural diagram of a battery cell provided by some embodiments of the present application;
FIG. 6 is a schematic structural diagram of a casing from one perspective provided by some embodiments of the present application;
FIG. 7 is a schematic structural diagram of a casing from another perspective provided by some embodiments of the present application;
FIG. 8 is an enlarged view of part A in FIG. 7;
FIG. 9 is a schematic structural diagram of a cover provided by some embodiments of the present application;
FIG. 10 is a schematic structural diagram of a sub-cover member from one perspective provided by some embodiments of the present application;
FIG. 11 is a schematic structural diagram of a sub-cover member from another perspective provided by some embodiments of the present application;
FIG. 12 is an exploded view of a battery provided by some other embodiments of the present application;
FIG. 13 is a schematic structural diagram of a battery cell provided by some other embodiments of the present application;
FIG. 14 is a schematic structural diagram of a cover provided by some other embodiments of the present application;
FIG. 15 is a schematic structural diagram of a sub-cover member from one perspective provided by some other embodiments of the present application;
FIG. 16 is a schematic structural diagram of a sub-cover member from another perspective provided by some other embodiments of the present application;
FIG. 17 is an exploded view of a battery provided by some further embodiments of the present application;
FIG. 18 is a schematic structural diagram of a battery cell provided by some further embodiments of the present application;
FIG. 19 is an exploded view of a battery provided by some still further embodiments of the present application;
FIG. 20 is a schematic structural diagram of a battery cell provided by some still further embodiments of the present application;
FIG. 21 is a schematic structural diagram of a cover provided by some further embodiments of the present application;
FIG. 22 is a schematic structural diagram of a sub-cover member from one perspective provided by some further embodiments of the present application;
FIG. 23 is a schematic structural diagram of a sub-cover member from another perspective provided by some further embodiments of the present application;
FIG. 24 is an exploded view of a battery provided by some still further embodiments of the present application;
FIG. 25 is a schematic structural diagram of a battery cell provided by some still further embodiments of the present application; and
FIG. 26 is a schematic structural diagram of a battery cell provided by some still further embodiments of the present application.

The reference signs in the drawings are:
10. battery; 100. electric apparatus; 101. controller; 102. motor;
11. casing; 12. battery group; 13. separating member; 14. second pressure relief mechanism; 120. battery cell;
111. main casing; 112. cover; 1121. main cover member; 1122. sub-cover member; 1123. first channel; 1124. second channel; 1125. third channel; 1121a. exhaust hole;
121. housing; 122. first pressure relief mechanism; 123. electrode; 1231. positive electrode; 1232. negative electrode;
a. first direction; b. second direction; and c. axial direction.

### DESCRIPTION OF EMBODIMENTS

To make the technical problems, technical solutions, and beneficial effects to be solved by the present application clearer, the present application is further described in detail below in conjunction with the drawings and embodiments. It should be understood that the specific embodiments described herein are merely intended to explain the present application and are not intended to limit the present application.

It should be noted that when an element is referred to as being "fixed to" or "provided on" another element, it may be directly on the other element or indirectly on the other element. When an element is referred to as being "connected to" another element, it may be directly connected to the other element or indirectly connected to the other element.

It should be understood that terms such as "length," "width," "upper," "lower," "front," "rear," "left," "right," "vertical," "horizontal," "top," "bottom," "inner," "outer," and the like indicating orientation or positional relationships are based on the orientations or positional relationships shown in the drawings, merely for the convenience of describing the present application and simplifying the description, and do not indicate or imply that the referenced device or element must have a specific orientation, be constructed, or operated in a specific orientation, and thus should not be construed as limiting the present application.

Furthermore, the terms "first" and "second" are used for descriptive purposes only and should not be understood as indicating or implying relative importance or implicitly indicating the number of technical features indicated. Thus, a feature defined by "first" or "second" may explicitly or implicitly include one or more of such features. In the description of the present application, "a plurality of" means two or more, unless otherwise specifically defined.

Thermal runaway of a cell refers to a heat runaway phenomenon triggered by one or more factors. Thermal runaway causes a sharp increase in the cell's temperature, and releases a large amount of heat and harmful gas, posing a risk of battery explosion.

For example, a process of cell thermal runaway leading to battery self-ignition or explosion is described. It starts with the decomposition of an SEI (Solid electrolyte interface, solid electrolyte interface) of a negative electrode inside a cell, followed by the decomposition and melting of a separator that separates the negative electrode from an electrolyte, reactions between the negative electrode and the electrolyte, and decomposition of a positive electrode and the electrolyte, causing large-scale short circuits inside the cell. This leads to the electrolyte entering a combustion state, cell thermal runaway, and self-ignition and explosion of the battery.

During normal charging and discharging of a cell, a space between a positive electrode and a negative electrode of the cell is filled with electrolyte, and directional movement of ions in the electrolyte and directional movement of electrons in external wires form a closed loop, enabling continuous chemical reactions between the positive electrode and the negative electrode. This orderly electron transfer process generates current, converting chemical energy into electrical energy. Therefore, the positive electrode and the negative electrode need to be electrically connected to other electrical components.

On this basis, an interior of a casing is generally provided with one or more conductive structures or materials. To prevent the positive electrode and negative electrode of the cell from conducting with these structures or materials to cause safety hazards, insulating structures or materials are required for insulation and separation. During the use of the battery, effective insulation performance must be ensured, and sealing measures are required at locations where gas separation is needed.

Generally, the cell is accommodated in an accommodation space formed by the enclosure of the casing, and a casing wall of the casing is provided with a cavity. When the cell undergoes thermal runaway, gas inside the cell is directed to the accommodation space or the cavity through an explosion-proof valve. Both the accommodation space and the cavity are part of an internal space of the casing, and the internal space has a limited volume, resulting in a limited effect on depressurizing and cooling the gas. If the gas is not sufficiently depressurized and cooled, it can easily adversely affect the aforementioned insulation and sealing designs, leading to short-circuit faults in the battery. This is not conducive to improving the safety performance of the battery.

Based on the above considerations, to reduce or eliminate the adverse effects of cell thermal runaway on the insulation and sealing designs inside a casing 11, thereby improving the safety performance of a battery 10, the battery 10 is provided. The casing 11 is provided with an exhaust hole 1121a penetrating the casing 11 along a thickness direction of the casing 11, a battery cell 120 is accommodated in the casing 11, the battery cell 120 includes a housing 121, and a first pressure relief mechanism 122 and two electrodes 123 that are provided on the housing 121, the first pressure relief mechanism 122 in an open state communicates the exhaust hole 1121a with an interior of the housing 121, and at least one of the two electrodes 123 and the first pressure relief mechanism 122 are provided on a same side of the housing 121.

In the battery 10 provided by this technical solution, the exhaust hole 1121a on the casing 11 penetrates the casing 11 along the thickness direction of the casing 11, and the first pressure relief mechanism 122 in the open state is in communication with the exhaust hole 1121a, such that gas discharged from the first pressure relief mechanism 122 is expelled from the casing 11 through the exhaust hole 1121a. This utilizes the external space of the casing 11 to cool and depressurize the gas, reducing or eliminating the risk of gas explosion inside the casing 11, thereby helping to improve the safety performance of the battery 10.

In some embodiments, the battery 10 is a physical module including one or more battery cells 120 for providing voltage and capacity. For example, it may include a battery cell 120, a battery module, a battery pack, or the like. Generally, a battery includes a battery cell 120 and a casing 11 for accommodating the battery cell 120. The casing 11 is configured to accommodate and encapsulate one or more battery cells 120 or battery modules, and the casing 11 is configured to protect the battery cell 120 and prevent liquids or other foreign objects from affecting the charging or discharging of the battery cell 120.

The battery cell 120 may include a lithium-ion secondary battery, a lithium-ion primary battery, a lithium-sulfur battery, a sodium-lithium-ion battery, a sodium-ion battery, or a magnesium-ion battery, and the embodiments of the present application are not limited thereto. The battery cell 120 may be in the shape of a cylinder, a flat body, a cuboid, or other shapes, and the embodiments of the present application are not limited thereto. The battery cell 120 can be classified into three types based on the encapsulation method: cylindrical battery cell, prismatic battery cell, and pouch battery cell, and the embodiments of the present application are not limited thereto.

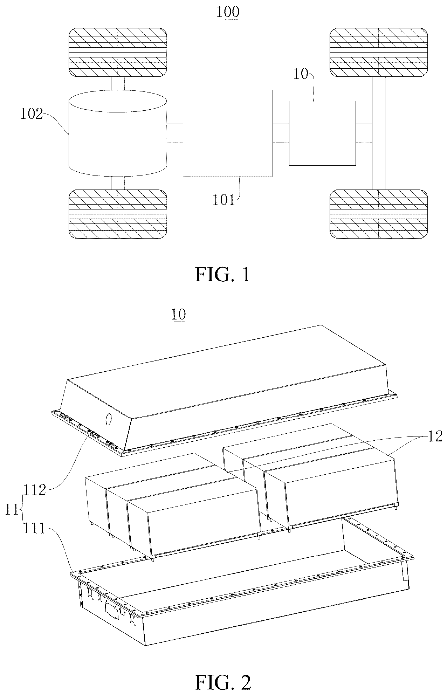

Referring to FIG. 2, the battery cell 120 is the smallest unit constituting the battery 10. In the battery 10, there may be a plurality of battery cells 120, and the plurality of battery cells 120 may be connected in series, in parallel, or in series-parallel, where series-parallel refers to a combination of both series and parallel connections among the plurality of battery cells 120. The plurality of battery cells 120 may be directly connected in series, in parallel, or in series-parallel, and the entire assembly of the plurality of battery cells 120 is accommodated in the casing 11. Alternatively, the battery 10 may include a plurality of battery cells 120 first connected in series, in parallel, or in series-parallel to form a battery module, and a plurality of battery modules are then connected in series, in parallel, or in series-parallel to form an assembly, which is accommodated in the casing 11.

The casing 11 provides an accommodation space for the battery cell 120, and the casing 11 may adopt various structures. In some embodiments, an exemplary casing 11 is provided. The casing 11 includes a main casing 111 and a cover 112, the main casing 111 and the cover 112 fit with each other, and the main casing 111 and the cover 112 together define an accommodation space for accommodating the battery cell 120. The cover 112 may be an enclosure structure with an opening on one side, and the cover 112 may be a plate-like structure. The cover 112 covers the open side of the main casing 111, and the main casing 111 and the cover 112 together define the accommodation space. Alternatively, both the main casing 111 and the cover 112 may be enclosure structures with an opening on one side, where the open side of the main casing 111 fits with the open side of the cover 112. Certainly, the casing 11 formed by the main casing 111 and the cover 112 may have various shapes, such as cylinder, cuboid, or the like.

The electric apparatus 100 provided by the embodiments of the present application may include, but is not limited to, mobile phones, tablets, laptops, electric toys, electric tools, electric bicycles, electric vehicles, ships, spacecraft, and the like. The electric toys may include fixed or mobile electric toys, such as game consoles, electric car toys, electric ship toys, and electric airplane toys, and the spacecraft may include airplanes, rockets, space shuttles, and spaceships, among others.

Referring to FIG. 1, the electric apparatus 100 may be a vehicle, which may be a fuel vehicle, a gas vehicle, or a new energy vehicle, and the new energy vehicle may be a battery electric vehicle, a hybrid vehicle, or an extended-range vehicle. The interior of the vehicle is provided with a battery 10, and the battery 10 may be provided at the bottom, front, or rear of the vehicle. The battery 10 may be used for powering the vehicle. For example, the battery 10 may serve as the operating power source of the vehicle. The vehicle may further include a controller 101 and a motor 102, where the controller 101 is configured to control the battery 10 to supply power to the motor 102, for example, for the operational power demands during starting, navigation, and driving of the vehicle. In some embodiments, the battery 10 may not only serve as the operating power source of the vehicle but also as the driving power source of the vehicle, replacing or partially replacing fuel or natural gas to provide driving power for the vehicle.

The battery 10 and the electric apparatus 100 provided by the embodiments of the present application are now described.

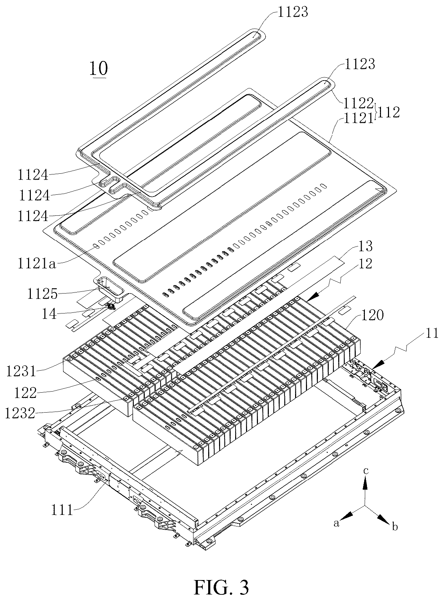

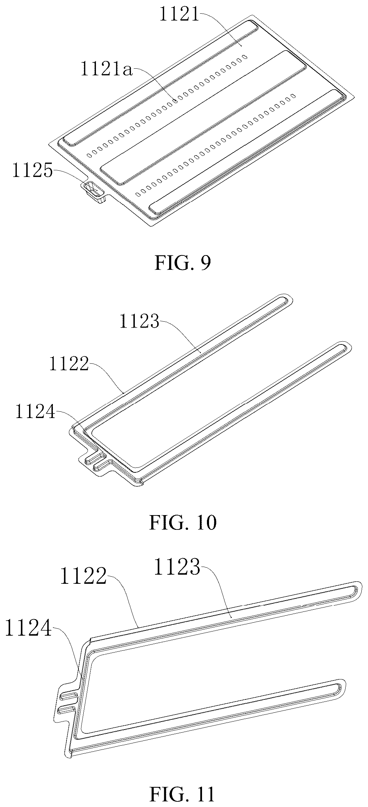

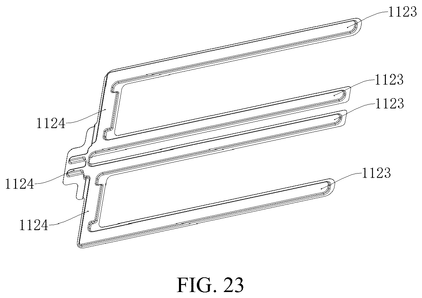

Referring to FIGs. 3 to 26, the battery 10 provided by the embodiments of the present application includes a casing 11 and a battery cell 120. The casing 11 is provided with an exhaust hole 1121a penetrating the casing 11 along a thickness direction of the casing 11, the battery cell 120 includes a housing 121, and a first pressure relief mechanism 122 two electrodes 123 that are provided on the housing 121, where the first pressure relief mechanism 122 in an open state communicates the exhaust hole 1121a with the interior of the housing 121, and at least one of the two electrodes 123 and the first pressure relief mechanism 122 are provided on a same side of the housing 121.

The casing 11 refers to a component that can at least accommodate the battery cell 120, or a component that enables orderly arrangement of a plurality of battery cells 120, providing support, protection, heat dissipation, fire prevention, explosion prevention, and other functions. The casing 11 may form an accommodation space by enclosing a plurality of casing walls from different sides, with the battery cell 120 accommodated in the accommodation space. Generally, the casing 11 is a metal component, and the casing wall includes one or more stacked metal plates. The metal plate refers to a plate-like structure made of metal material, and the metal plate has a specific thickness and an extended area, with a large ratio of the extended area to the thickness. The exhaust hole 1121a penetrates the casing wall along the thickness direction of the casing wall, communicating the space where the first pressure relief mechanism 122 is located with the external space of the casing wall.

The battery cell 120 refers to a single electrochemical cell containing a positive electrode 1231 and a negative electrode 1232. The battery cell 120, as an energy storage unit, is the smallest unit of the power battery 10. A single lithium-ion battery 10 is used as an example. The operating voltage of a single lithium-ion battery 10 is between 3 V and 5 V. To meet the high voltage and high capacity requirements of the electric apparatus 100, a plurality of battery cells 120 are generally connected in series or parallel to form the battery 10, and the battery 10 supplies electrical energy to the electric apparatus 100.

The exhaust hole 1121a refers to a structure provided on the casing 11 and penetrating the casing wall along the thickness direction of the casing wall of the casing 11. The exhaust hole 1121a is provided to discharge gas from the first pressure relief mechanism 122 when the interior of the battery cell 120 undergoes thermal runaway and the first pressure relief mechanism 122 is in an open state. The first pressure relief mechanism 122 and the exhaust hole 1121a provide a path for gas to be discharged from the interior of the battery cell 120 to the exterior of the casing 11.

The housing 121 refers to a structure forming the outer contour of the battery cell 120 and having a cavity, with an electrolyte provided in the cavity. The space between the positive electrode 1231 and the negative electrode 1232 of the battery cell 120 is filled with the electrolyte, and directional movement of ions in the electrolyte and directional movement of electrons in the wires form a closed loop, enabling continuous chemical reactions between the positive electrode 1231 and the negative electrode 1232. This orderly electron transfer process generates current, converting chemical energy into electrical energy.

The first pressure relief mechanism 122 refers to a valve structure provided on a housing wall of the housing 121 and capable of being opened under set conditions. Generally, the first pressure relief mechanism 122 includes a valve body with a passage and a valve core provided in the passage and movable relative to the valve body. The valve body is fixedly provided on the housing wall of the housing 121. In a normal state, the valve core closes the passage of the valve body, and the first pressure relief mechanism 122 is in a blocking state. Under a set condition, the valve core moves relative to the valve body to open the passage, and the first pressure relief mechanism 122 is in an open state. For example, the first pressure relief mechanism 122 may be an explosion-proof valve, a one-way valve, or other valve structures. For example, the set condition may be a set pressure or a set temperature, and the set condition is determined based on the type of the first pressure relief mechanism 122 selected.

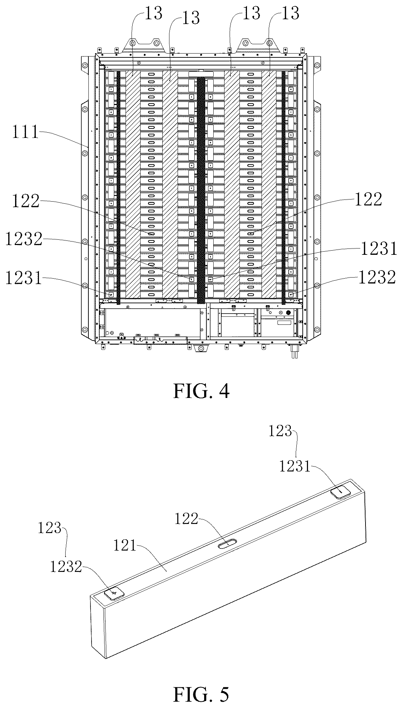

The electrodes 123 refer to the positive electrode 1231 and the negative electrode 1232 of the battery cell 120. Generally, the positive electrode 1231 and the negative electrode 1232 are provided on the same side of the battery cell 120. As shown in FIG. 5, the battery cell 120 is a prismatic battery 10, with the positive electrode 1231 and the negative electrode 1232 spaced apart on the top surface of the battery cell 120.

With the first pressure relief mechanism 122 provided on the side of the battery cell 120 where the electrodes 123 are located, the communication between the first pressure relief mechanism 122 and the exhaust hole 1121a can allow gas to be discharged from the casing 11. None of the installation of the electrodes 123, other electrical components, and connecting wires inside the casing 11 requires sealing measures to prevent gas from entering the electrical compartment.

In some embodiments, one of the electrodes 123 and the first pressure relief mechanism 122 may be provided on a same side of the housing 121, while the other electrode 123 and the first pressure relief mechanism 122 may be provided on different sides of the housing 121. For example, the negative electrode 1232 and the first pressure relief mechanism 122 may be provided on two opposite sides of the housing 121, with the side where the negative electrode 1232 is located and the side where the first pressure relief mechanism 122 is located separated by the battery cell 10 itself, further improving the safety performance of the battery 10.

In the battery 10 provided by this technical solution, the exhaust hole 1121a on the casing 11 penetrates the casing 11 in the thickness direction thereof, and the first pressure relief mechanism 122 in the open state is in communication with the exhaust hole 1121a, such that gas discharged from the first pressure relief mechanism 122 is expelled from the casing 11 through the exhaust hole 1121a. This utilizes the external space of the casing 11 to cool and depressurize the gas, reducing or eliminating the risk of gas explosion inside the casing 11, thereby helping to improve the safety performance of the battery 10.

In some embodiments, the battery 10 further includes a separating member 13, the separating member 13 is connected between the casing 11 and the battery cell 120, one side of the separating member 13 is separated from the other side opposite the one side, the first pressure relief mechanism 122 and the exhaust hole 1121a are provided on one side, and the electrodes 123 located on the same side as the first pressure relief mechanism 122 are provided on the other side.

The separating member 13 refers to a component connected between the inner wall of the casing 11 and the surface of the battery cell 120 and capable of separating the first pressure relief mechanism 122 from the electrode 123 and separating the exhaust hole 1121a from the electrode 123.

The separating member 13 may be a rigid component with high hardness, such as a ceramic material component, or a plastic component with lower hardness, such as a plastic or resin material component. Alternatively, the separating member 13 may be formed by filling the space between the interior of the casing 11 and the surface of the battery cell 120 with a fluid substance and allowing it to solidify.

In some embodiments, the separating member 13 may be connected to the inner wall of the casing 11 through adhesive bonding, and the separating member 13 may be connected to the surface of the battery cell 120 through adhesive bonding.

The separating member 13 separates the first pressure relief mechanism 122 from the electrode 123, as well as the exhaust hole 1121a from the electrode 123, thereby separating the path of gas discharged from the first pressure relief mechanism 122 to the exhaust hole 1121a from the electrode 123, and preventing the gas from adversely affecting the electrode 123 and its insulation design.

In some embodiments, for one battery cell 120, the separating member 13 may separate the electrode 123 from the first pressure relief mechanism 122. For example, the separating member 13 may be annular, with the first pressure relief mechanism 122 and the exhaust hole 1121a provided within the circumference defined by the separating member 13, and at least one electrode 123 provided outside the circumference defined by the separating member 13.

For a plurality of battery cells 120, the battery includes a plurality of separating members 13, a plurality of first pressure relief mechanisms 122 are respectively provided within the circumferences of the plurality of separating members 13, a plurality of exhaust holes 1121a are respectively provided within the circumferences of the plurality of separating members 13, and a plurality of electrodes 123 are provided outside the circumferences of the plurality of separating members 13. Alternatively, the battery includes one separating member 13, a plurality of first pressure relief mechanisms 122 are provided within the circumference of the one separating member 13, a plurality of exhaust holes 1121a are provided within the circumference of the one separating member 13, and a plurality of electrodes 123 provided outside the circumference of the one separating member 13.

In some other embodiments, for one battery cell 120, the separating member 13 may separate the electrode 123 from the first pressure relief mechanism 122. For example, the separating member 13 may be strip-shaped, with the first pressure relief mechanism 122 and the exhaust hole 1121a provided on one side of the separating member 13, and the electrode 123 provided on the other side of the separating member 13.

For a plurality of battery cells 120, the battery includes a plurality of separating members 13, the plurality of separating members 13 are sequentially connected to form an integrated structure, a plurality of first pressure relief mechanisms 122 and a plurality of exhaust holes 1121a are provided on the same side of the separating member 13, and a plurality of electrodes 123 are provided on the other side of the separating member 13.

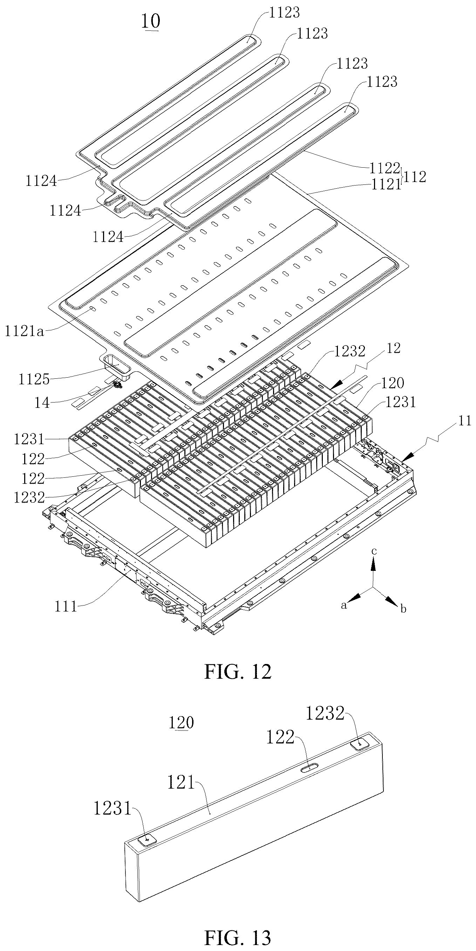

As shown in FIGs. 3 and 12, in some embodiments, the first pressure relief mechanism 122 and the two electrodes 123 are provided on a same side of the housing 121, the first pressure relief mechanism 122 is provided between the two electrodes 123, a separating member 13 is provided between the first pressure relief mechanism 122 and one electrode 123, and a separating member 13 is provided between the first pressure relief mechanism 122 and the other electrode 123.

When the first pressure relief mechanism 122 and the two electrodes 123 are provided on the same side of the housing 121, one separating member 13 separates one electrode 123 from the first pressure relief mechanism 122, and another separating member 13 separates the other electrode 123 from the first pressure relief mechanism 122, such that the two electrodes 123 are separately separated, and the path of gas discharged from the first pressure relief mechanism 122 to the exhaust hole 1121a is separated from either electrode 123, preventing the gas from adversely affecting either electrode 123 or its insulation design.

As shown in FIG. 3, in some embodiments, the first pressure relief mechanism 122 is provided at a central position between the two electrodes 123. The two electrodes 123 refer to the positive electrode 1231 and the negative electrode 1232.

The first pressure relief mechanism 122 is equidistant from the two electrodes 123, providing sufficient spacing between the first pressure relief mechanism 122 and either electrode 123, facilitating the placement of the separating member 13 between the first pressure relief mechanism 122 and either electrode 123.

In some embodiments, the battery 10 includes a plurality of battery groups 12, with the plurality of battery groups 12 arranged along the second direction b. Each battery group 12 includes a plurality of battery cells 120, with the plurality of battery cells 120 stacked along the first direction a. On each battery cell 120, the first pressure relief mechanism 122 is provided at a central position between the two electrodes 123 along the second direction b. In each battery group 12, a plurality of first pressure relief mechanisms 122 are arranged along the first direction a to form a group, with the group of first pressure relief mechanisms 122 provided at a central position of the battery group 12 along the second direction b.

The casing 11 is provided with a plurality of exhaust holes 1121a, with the plurality of exhaust holes 1121a arranged along a first direction a, and the exhaust holes 1121a and the first pressure relief mechanisms 122 are provided in one-to-one correspondence. Alternatively, the casing 11 is provided with one exhaust hole 1121a, with the one exhaust hole 1121a extending along the first direction a, and the exhaust hole 1121a is provided in a one-to-many correspondence with a plurality of first pressure relief mechanisms 122.

Taking the example where the casing 11 is provided with a plurality of exhaust holes 1121a, one separating member 13 extends along the first direction a in a strip shape, the separating member 13 is connected to a plurality of battery cells 120, a plurality of first pressure relief mechanisms 122 and a plurality of exhaust holes 1121a are provided on one side, and a plurality of positive electrodes 1231 are provided on the other side.

Another separating member 13 extends along the first direction a in a strip shape, the separating member 13 is connected to a plurality of battery cells 120, a plurality of first pressure relief mechanisms 122 and a plurality of exhaust holes 1121a are provided on one side, and a plurality of negative electrodes 1232 are provided on the other side.

As shown in FIG. 12, in some embodiments, the first pressure relief mechanism 122 is proximate to one electrode 123 and distant from the other electrode 123.

This provides another arrangement for the first pressure relief mechanism 122, suitable for the arrangement requirement that the distance between one electrode 123 and the first pressure relief mechanism 122 needs to be greater than the distance between the other electrode 123 and the first pressure relief mechanism 122.

In some embodiments, the battery 10 includes a plurality of battery groups 12, with the plurality of battery groups 12 arranged along the second direction b. Each battery group 12 includes a plurality of battery cells 120, with the plurality of battery cells 120 stacked along the first direction a. On each battery cell 120, the first pressure relief mechanism 122 is provided at a position proximate to the negative electrode 1232 along the second direction b. In each battery group 12, any two adjacent battery cells 120 are disposed opposite along the second direction b, forming two groups of first pressure relief mechanisms 122 arranged along the second direction b, each group including a plurality of first pressure relief mechanisms 122 arranged along the first direction a. One group of first pressure relief mechanisms 122 is separated from the electrode 123 on the adjacent edge side by one strip-shaped separating member 13, and another group of first pressure relief mechanisms 122 is separated from the electrode 123 on the adjacent edge side by another strip-shaped separating member 13.

In some other embodiments, there are two types of battery cell 120. In one type of battery cell 120, the first pressure relief mechanism 122 is provided at a position of the two electrodes 123 proximate to the negative electrode 1232 along the second direction b. In another type of battery cell 120, the first pressure relief mechanism 122 is provided at a position of the two electrodes 123 proximate to the positive electrode 1231 along the second direction b.

The battery 10 includes a plurality of battery groups 12, with the plurality of battery groups 12 arranged along the second direction b. Each battery group 12 includes a plurality of battery cells 120, with the plurality of battery cells 120 stacked along the first direction a, and the two types of batteries are alternately arranged along the first direction a. In each battery group 12, a group of first pressure relief mechanisms 122 is arranged along the second direction b, the group including a plurality of first pressure relief mechanisms 122 arranged along the first direction a. The group of first pressure relief mechanisms 122 is separated from the positive electrode 1231 on the adjacent edge side by one strip-shaped separating member 13, and the group of first pressure relief mechanisms 122 is separated from the negative electrode 1232 on the adjacent edge side by another strip-shaped separating member 13.

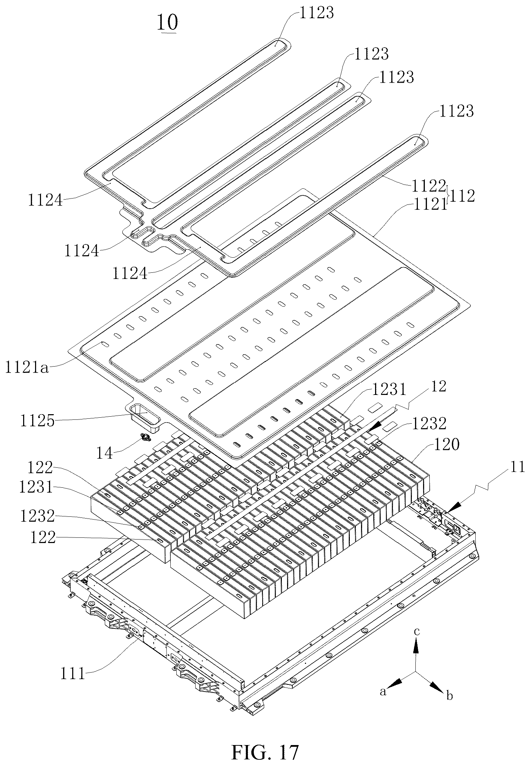

Referring to FIGs. 17, 19, and 24, in some embodiments, the first pressure relief mechanism 122 and the two electrodes 123 are provided on the same side of the housing 121, the first pressure relief mechanism 122 and the two electrodes 123 are sequentially arranged, and a separating member 13 is provided between the first pressure relief mechanism 122 and the electrode 123 adjacent thereto.

This provides another arrangement for the first pressure relief mechanism 122, suitable for the arrangement requirement that the first pressure relief mechanism 122 is provided on an edge side of the battery cell 120, while the two electrodes 123 are provided on another edge side or a middle region.

As shown in FIG. 17, in some embodiments, the first pressure relief mechanism 122 and the two electrodes 123 are provided on the same side of the housing 121, and the first pressure relief mechanism 122 and the two electrodes 123 are sequentially arranged. The two electrodes 123 are provided at a central position of the battery cell 120 along the second direction b, meaning the two electrodes 123 may be symmetrically arranged about the center of the battery cell 120 along the second direction b, while the first pressure relief mechanism 122 is provided on the outer edge side of either electrode 123 along the second direction b, with a separating member 13 provided between the first pressure relief mechanism 122 and the electrode 123 adjacent thereto.

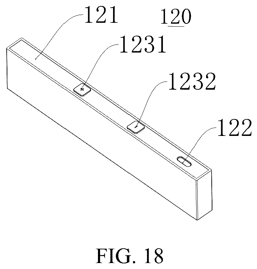

For example, the first pressure relief mechanism 122 may be provided on the outer edge side of the positive electrode 1231 or the negative electrode 1232 along the second direction b. As shown in FIG. 18, the first pressure relief mechanism 122 is provided on the outer edge side of the negative electrode 1232 along the second direction b.

In some embodiments, the battery 10 includes a plurality of battery groups 12, with the plurality of battery groups 12 arranged along the second direction b. Each battery group 12 includes a plurality of battery cells 120, with the plurality of battery cells 120 stacked along the first direction a. On each battery cell 120, the two electrodes 123 are provided at a central position of the battery cell 120 along the second direction b, and the first pressure relief mechanism 122 is provided on the outer edge side of the negative electrode 1232 along the second direction b. In each battery group 12, any two adjacent battery cells 120 are disposed opposite along the second direction b, forming two groups of first pressure relief mechanisms 122 arranged along the second direction b, with the two groups of first pressure relief mechanisms 122 provided on the outer sides of the two electrodes 123, each group including a plurality of first pressure relief mechanisms 122 arranged along the first direction a. One group of first pressure relief mechanisms 122 on one outer edge side is separated from the electrode 123 adjacent thereto by one strip-shaped separating member 13, and another group of first pressure relief mechanisms 122 on the other outer edge side is separated from the electrode 123 on the adjacent edge side by another strip-shaped separating member 13.

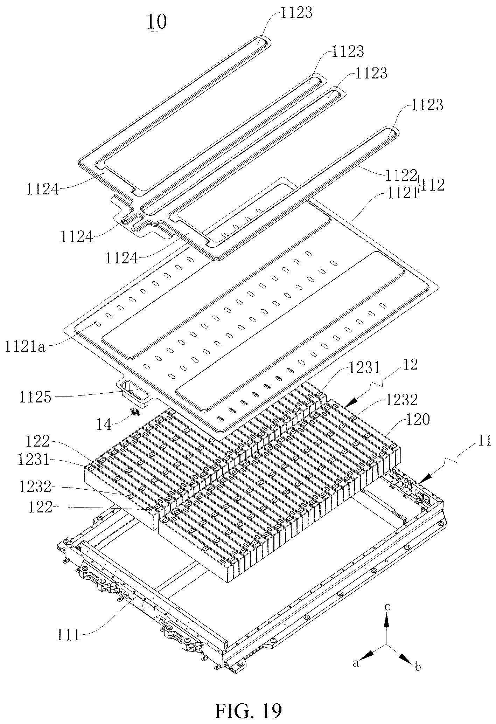

As shown in FIG. 19, in some embodiments, the first pressure relief mechanism 122 and the two electrodes 123 are provided on the same side of the housing 121, and the first pressure relief mechanism 122 and the two electrodes 123 are sequentially arranged. One of the two electrodes 123 is provided on one edge side of the battery cell 120 along the second direction b, the first pressure relief mechanism 122 is provided on another edge side of the battery cell 120 along the second direction b, the other one of the two electrodes 123 is provided in a middle region, and the other electrode 123 is closer to the first pressure relief mechanism 122.

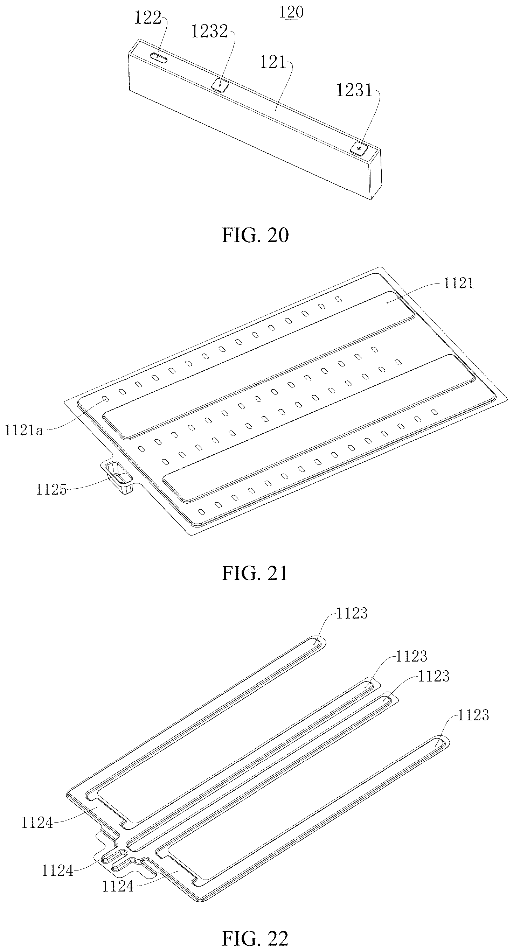

For example, as shown in FIG. 20, the positive electrode 1231 is provided on one edge side of the battery cell 120 along the second direction b, the first pressure relief mechanism 122 is provided on another edge side of the battery cell 120 along the second direction b, the negative electrode 1232 is provided in a middle region, and the negative electrode 1232 is closer to the first pressure relief mechanism 122.

In some embodiments, the battery 10 includes a plurality of battery groups 12, with the plurality of battery groups 12 arranged along the second direction b. Each battery group 12 includes a plurality of battery cells 120, with the plurality of battery cells 120 stacked along the first direction a. On each battery cell 120, the positive electrode 1231 is provided on one edge side of the battery cell 120 along the second direction b, the first pressure relief mechanism 122 is provided on another edge side of the battery cell 120 along the second direction b, the negative electrode 1232 is provided in a middle region, and the negative electrode 1232 is closer to the first pressure relief mechanism 122. In each battery group 12, any two adjacent battery cells 120 are disposed opposite along the second direction b, forming two groups of first pressure relief mechanisms 122 arranged along the second direction b, each group including a plurality of first pressure relief mechanisms 122 arranged along the first direction a. In this embodiment, each first pressure relief mechanism may be separated by an annular separating member 13, or the separating member 13 extends along the periphery of a plurality of first pressure relief mechanisms 122 along the first direction a while avoiding the electrode 123 adjacent thereto.

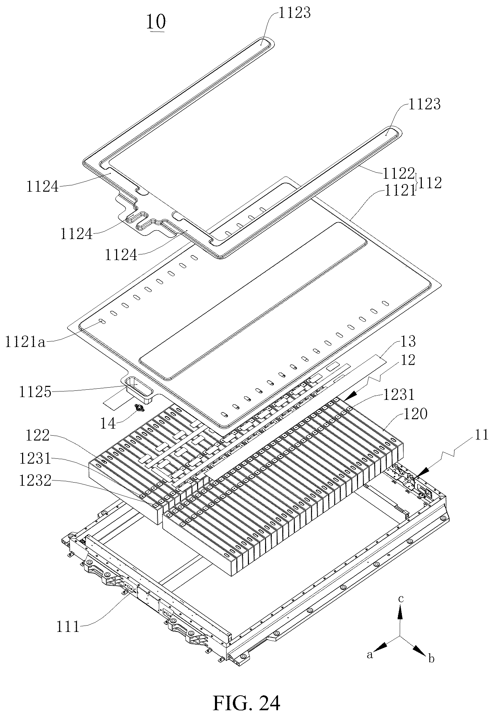

As shown in FIG. 24, in some embodiments, the first pressure relief mechanism 122 and the two electrodes 123 are provided on the same side of the housing 121, and the first pressure relief mechanism 122 and the two electrodes 123 are sequentially arranged. The two electrodes 123 are provided on one edge side of the battery cell 120 along the second direction b, meaning the two electrodes 123 are spaced apart and closer to one edge side, while the first pressure relief mechanism 122 is provided on another outer edge side along the second direction b, with a separating member 13 provided between the first pressure relief mechanism 122 and the electrode 123 adjacent thereto.

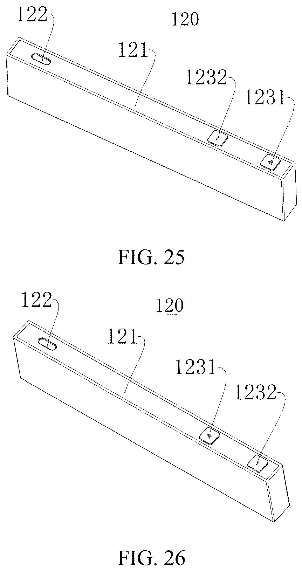

For example, as shown in FIGs. 25 and 26, there may be two types of battery cell 120: in one type of battery cell 120, the positive electrode 1231 is closer to the first pressure relief mechanism 122, while in another type of battery cell 120, the negative electrode 1232 is closer to the first pressure relief mechanism 122.

In some embodiments, the battery 10 includes a plurality of battery groups 12, with the plurality of battery groups 12 arranged along the second direction b. Each battery group 12 includes a plurality of battery cells 120, with the plurality of battery cells 120 stacked along the first direction a. The two electrodes 123 are provided on one edge side of the battery cell 120 along the second direction b, while the first pressure relief mechanism 122 is provided on another outer edge side along the second direction b. There may be two types of battery cell 120: in one type of battery cell 120, the positive electrode 1231 is closer to the first pressure relief mechanism 122, while in another type of battery cell 120, the negative electrode 1232 is closer to the first pressure relief mechanism 122. In each battery group 12, one type of battery 10 and another type of battery 10 are alternately stacked along the first direction a. A group of first pressure relief mechanisms 122 is arranged along the second direction b, the group including a plurality of first pressure relief mechanisms 122 arranged along the first direction a. The group of first pressure relief mechanisms 122 is separated from the electrode 123 adjacent thereto by one strip-shaped separating member 13.

In some embodiments, the battery 10 includes a plurality of battery cells 120, the plurality of battery cells 120 are stacked along a first direction a, and any two adjacent battery cells 120 are disposed opposite along a second direction b, where the first direction a is perpendicular to the second direction b.

Opposite placement means that the positive electrode 1231 and the negative electrode 1232 of two adjacent battery cells 120 are oppositely oriented along the second direction b. For example, as shown in FIGs. 3, 12, 17, and 19, the battery 10 includes one type of battery cell 120, with a plurality of battery cells 120 sequentially stacked along the first direction a, and the positive electrode 1231 and the negative electrode 1232 of two adjacent battery cells 120 are disposed opposite along the second direction b.

The opposite placement of any two adjacent battery cells 120 along the second direction b can form one or two groups of first pressure relief mechanisms 122 spaced apart along the second direction b, each group including a plurality of first pressure relief mechanisms 122 arranged along the first direction a, facilitating the layout design of the first pressure relief mechanisms 122 based on the internal space of the battery 10.

In some embodiments, the battery 10 includes a plurality of battery cells 120, the plurality of battery cells 120 are stacked along a first direction a, and any two adjacent battery cells 120 are identically placed along a second direction b, where the first direction a is perpendicular to the second direction b.

Identical placement means that the first pressure relief mechanisms 122 of two adjacent battery cells 120 are located on the same side. For example, identical placement can be applied to two types of battery cells 120, where in both types of battery cells 120, the first pressure relief mechanism 122 is located on one side of the battery cell 120 along the second direction b, and the positive electrode 1231 and the negative electrode 1232 are located on another side of the battery cell 120 along the second direction b. For example, as shown in FIG. 24, the battery 10 includes two types of battery cells 120, with the two types of battery cells 120 alternately stacked along the first direction a, and the two first pressure relief mechanisms 122 of two adjacent battery cells 120 are located on one side of the battery cell 120 along the second direction b, while the positive electrode 1231 and the negative electrode 1232 of two adjacent battery cells 120 are located on another side of the battery cell 120 along the second direction b.

The identical placement of any two adjacent battery cells 120 along the second direction b can form a group of first pressure relief mechanisms 122 arranged along the first direction a, facilitating the layout design of the first pressure relief mechanisms 122 based on the internal space of the battery 10.

In some embodiments, the separating member 13 extends along the first direction a, and the separating member 13 is connected to the plurality of battery cells 120.

The plurality of battery cells 120 achieve separation of a group of first pressure relief mechanisms 122 and exhaust holes 1121a from the electrodes 123 through a single separating member 13, simplifying the internal structure of the battery 10.

In some other embodiments, the separating member 13 is annular, with the first pressure relief mechanism 122 and the exhaust hole 1121a provided within the circumference defined by the separating member 13, and at least one electrode 123 provided outside the circumference defined by the separating member 13.

In some embodiments, a spacing distance between the separating member 13 and the electrode 123 adjacent thereto is greater than or equal to 35 mm, and the size of the separating member 13 in a direction of the separating member 13 pointing toward the electrode 123 adjacent thereto is greater than or equal to 4 mm and less than or equal to the spacing distance between the separating member 13 and the electrode 123 adjacent thereto.

In the direction of the separating member 13 pointing toward the electrode 123 adjacent thereto, the size of the separating member 13 is greater than or equal to 4 mm and less than or equal to the spacing distance between the separating member 13 and the electrode 123 adjacent thereto, enabling separation while enhancing the connection strength between the separating member 13, the casing 11, and the battery cell 120.

In some embodiments, the size of the separating member 13 in a direction from the casing 11 toward the battery cell 120 is greater than or equal to 0.3 mm.

In the direction from the casing 11 toward the battery cell 120, the size of the separating member 13 is greater than or equal to 0.3 mm, enabling separation while enhancing the connection strength between the separating member 13, the casing 11, and the battery cell 120.

In some embodiments, the casing 11 is provided with a channel structure, the channel structure and the first pressure relief mechanism 122 are provided on two sides of the exhaust hole 1121a along its axial direction c, and the exhaust hole 1121a is in communication with the channel structure.

The channel structure is a channel-type structure provided on the casing 11 and located outside the exhaust hole 1121a, having a specific caliber to allow gas to pass through and a specific length to directionally guide the gas, with a large ratio of length to caliber.

The channel structure guides the gas to be directionally discharged from the casing 11, facilitating directional control of the gas, reducing the likelihood of safety hazards, and minimizing the number of paths for gas discharge from the casing 11, thereby simplifying the structural design of the casing 11.

In some embodiments, the casing 11 is provided with a second pressure relief mechanism 14, the second pressure relief mechanism 14 is provided at an end of the channel structure distant from the exhaust hole 1121a, and the second pressure relief mechanism 14 in an open state communicates the channel structure with the exterior of the casing 11.

The second pressure relief mechanism 14 is a valve structure provided on a housing wall of the housing 121 and capable of being opened under set conditions. Generally, the second pressure relief mechanism 14 includes a valve body with a passage and a valve core provided in the passage and movable relative to the valve body, where the valve body is fixedly provided on the housing wall of the housing 121. In a normal state, the valve core closes the passage of the valve body, and the second pressure relief mechanism 14 is in a blocking state. Under set conditions, the valve core moves relative to the valve body to open the passage, and the second pressure relief mechanism 14 is in an open state. For example, the second pressure relief mechanism 14 may be an explosion-proof valve, a one-way valve, or other valve structures. For example, the set conditions may be a set pressure or a set temperature, determined based on the type of the second pressure relief mechanism 14 selected.

Providing the second pressure relief mechanism 14 at the end of the channel structure facilitates directional gas discharge, reducing the likelihood of safety hazards.

In some embodiments, the battery 10 includes a plurality of battery cells 120 stacked along a first direction a, the casing 11 is provided with a plurality of exhaust holes 1121a arranged along the first direction a, the plurality of exhaust holes 1121a each are in communication with the channel structure, and the first pressure relief mechanisms 122 are provided in one-to-one correspondence to the exhaust holes 1121a.

In the case where the battery 10 includes a plurality of battery cells 120, providing a plurality of exhaust holes 1121a, with an arrangement direction of the plurality of exhaust holes 1121a consistent with that of the plurality of battery cells 120, enables exhaustion for the plurality of battery cells 120.

For example, the first direction a is the length direction of the battery 10, the second direction b is the width direction of the battery 10, the axial direction c of the exhaust hole 1121a is the height direction of the battery 10, and the first direction a, the second direction b, and the height direction are pairwise perpendicular.

In some embodiments, as shown in FIG. 1, the casing 11 has a length along the first direction a, the battery cell 120 has a thickness along the first direction a, the casing 11 and the battery cell 120 both have a height along the axial direction c, a plurality of exhaust holes 1121a are sequentially arranged along the length direction of the casing 11, a plurality of battery cells 120 are sequentially stacked along the length direction of the casing 11, the height at which the plurality of exhaust holes 1121a are located is higher than the height at which the plurality of battery cells 120 are located, and the plurality of exhaust holes 1121a and the plurality of first pressure relief mechanisms 122 are provided in one-to-one correspondence along the height direction of the casing 11.

The position of the exhaust hole 1121a on the casing 11 can be selected based on the position of the first pressure relief mechanism 122 on the battery cell 120. For example, the casing 11 has a width along the second direction b, and the design position of the first pressure relief mechanism 122 relative to the battery cell 120 can be changed along the width direction of the casing 11, so the exhaust hole 1121a can also be adjusted accordingly, with one exhaust hole 1121a and one first pressure relief mechanism 122 aligned as much as possible along the height direction of the casing 11. Alignment means that the central axis of the exhaust hole 1121a and the central axis of the first pressure relief mechanism 122 substantially coincide.

Certainly, when the number of first pressure relief mechanisms 122 on one battery cell 120 is not limited to one, the number of exhaust holes 1121a can also be increased accordingly. The arrangement direction of a plurality of first pressure relief mechanisms 122 on one battery cell 120 can be arbitrarily selected, and the arrangement direction of the exhaust holes 1121a can be set to match the arrangement direction of the plurality of first pressure relief mechanisms 122.

For example, the top surface of one battery cell 120 is provided with two first pressure relief mechanisms 122 arranged along the width direction of the casing 11, and correspondingly, the casing 11 is provided with two exhaust holes 1121a arranged along its width direction.

In the plurality of battery cells 120, two groups of first pressure relief mechanisms 122 are spaced apart along the width direction of the casing 11, each group including a plurality of first pressure relief mechanisms arranged along the first direction a. Correspondingly, two groups of exhaust holes 1121a are spaced apart along the width direction of the casing 11, with the two groups of first pressure relief mechanisms 122 and the two groups of exhaust holes provided in one-to-one correspondence.

In some embodiments, unlike the solution where the battery cell 120 has a thickness along the length direction of the casing 11 and a plurality of battery cells 120 are stacked along the length direction of the casing 11, the battery cell 120 has a length along the width direction of the casing 11 and the plurality of battery cells 120 are sequentially arranged along the width direction of the casing 11, so a plurality of exhaust holes 1121a can be sequentially arranged along the width direction of the casing 11.

In the case where the battery includes a plurality of battery cells 120, providing a plurality of exhaust holes 1121a, with an arrangement direction of the plurality of exhaust holes 1121a consistent with that of the plurality of battery cells 120, enables exhaustion for the plurality of battery cells 120.

In some embodiments, the battery 10 includes a plurality of battery cells 120 stacked along a first direction a, the exhaust hole 1121a extends along the first direction a, and the plurality of first pressure relief mechanisms 122 of the plurality of battery cells 120 are provided within a projection of the exhaust hole 1121a along its axial direction c, where the first direction a is perpendicular to the axial direction c.

In the case where the battery 10 includes a plurality of battery cells 120, aligning the extension direction of the exhaust hole 1121a with the arrangement direction of the plurality of battery cells 120 enables exhaustion for the plurality of battery cells 120.

For example, the first direction a is the length direction of the battery 10, the second direction b is the width direction of the battery 10, the axial direction c of the exhaust hole 1121a is the height direction of the battery 10, and the first direction a, the second direction b, and the height direction are pairwise perpendicular.

In some embodiments, the casing 11 has a length along the first direction a, the battery cell 120 has a thickness along the first direction a, the exhaust hole 1121a extends along the length direction of the casing 11 with a length, and in this case, the exhaust hole 1121a is strip-shaped. The plurality of battery cells 120 are sequentially stacked along the length direction of the casing 11, the height at which the exhaust hole 1121a is located is higher than the height at which the plurality of battery cells 120 are located, and one exhaust hole 1121a is directly aligned with a plurality of first pressure relief mechanisms 122 along the height direction of the casing 11.

The position of the exhaust hole 1121a on the casing 11 can be selected based on the position of the first pressure relief mechanism 122 on the battery cell 120. For example, the casing 11 has a width along a third direction, and the design position of the first pressure relief mechanism 122 relative to the battery cell 120 can be changed along the width direction of the casing 11, so the exhaust hole 1121a can also be adjusted accordingly, with the projection of one exhaust hole 1121a along the height direction of the casing 11 accommodating a plurality of first pressure relief mechanisms 122 as much as possible.

In some embodiments, unlike the solution where the battery cell 120 has a thickness along the length direction of the casing 11 and the plurality of battery cells 120 are stacked along the length direction of the casing 11, the battery cell 120 has a length along the width direction of the casing 11 and the plurality of battery cells 120 are sequentially arranged along the width direction of the casing 11, so the exhaust hole 1121a can extend along the width direction of the casing 11.

In the case where the battery includes a plurality of battery cells 120, aligning the extension direction of the exhaust hole 1121a with the arrangement direction of the plurality of battery cells 120 enables exhaustion for the plurality of battery cells 120.

In some embodiments, the channel structure includes a first channel 1123, the first channel 1123 extends along the first direction a, and the exhaust hole 1121a communicates the first channel 1123 with the first pressure relief mechanism 122.

The first channel 1123 is a channel structure provided on the casing 11 and located outside the exhaust hole 1121a, having a specific caliber to allow gas to pass through and a specific length to directionally guide the gas, with a large ratio of length to caliber. The first channel 1123 is configured to allow gas from a plurality of exhaust holes 1121a to flow through.

The first channel 1123 converges gas from the exhaust hole 1121a and guides the gas to be directionally discharged from the casing 11, facilitating directional control of the gas, reducing the likelihood of safety hazards, and minimizing the number of paths for gas discharge from the casing 11, thereby simplifying the structural design of the casing 11.

In some embodiments, as shown in FIG. 1, the casing 11 has a length along the first direction a, and the battery cell 120 has a thickness along the first direction a. The first channel 1123 extends along the length direction of the casing 11, the plurality of battery cells 120 are stacked along the length direction of the casing 11, a plurality of exhaust holes 1121a are sequentially arranged along the length direction of the casing 11, or the exhaust hole 1121a extends along the length direction of the casing 11, with the height at which the exhaust hole 1121a is located lower than the height at which the first channel 1123 is located, and a plurality of exhaust holes 1121a are provided within a projection of one first channel 1123 along the height direction of the casing 11, or one strip-shaped exhaust hole 1121a is provided within a projection of one first channel 1123 along the height direction of the casing 11.

In some embodiments, unlike the solution where the battery cell 120 has a thickness along the length direction of the casing 11 and the plurality of battery cells 120 are stacked along the length direction of the casing 11, the battery cell 120 has a length along the width direction of the casing 11 and the plurality of battery cells 120 are sequentially arranged along the width direction of the casing 11, so the strip-shaped exhaust hole 1121a can extend along the width direction of the casing 11, or a plurality of exhaust holes 1121a can be sequentially arranged along the width direction of the casing 11, and the first channel 1123 can extend along the width direction of the casing 11.

The extension direction of the first channel 1123 is consistent with the arrangement direction of the plurality of exhaust holes 1121a, with the plurality of exhaust holes 1121a provided within a projection of the first channel 1123 along the second direction b, making the layout of the first channel 1123 and the plurality of exhaust holes 1121a simpler, facilitating the simplification of the structural design of the casing 11.

In some embodiments, the battery 10 includes a plurality of battery groups 12 arranged along a second direction b, each battery group 12 includes a plurality of battery cells 120, where the first direction a is perpendicular to the second direction b, the channel structure includes a plurality of first channels 1123, and the first channels 1123 are provided in one-to-one correspondence to the battery groups 12.

The battery group 12 refers to dividing the plurality of battery cells 120 included in the battery 10 into a plurality of groups, where the plurality of battery cells 120 in each group have a same arrangement direction, and each battery group 12 includes at least two battery cells 120.

In the case where a plurality of battery groups 12 are provided, providing a plurality of first channels 1123, where one first channel 1123 can converge gas discharged from a plurality of valves of a plurality of battery cells 120 in one battery group 12, enables exhaustion for the plurality of battery groups 12.

In some embodiments, as shown in FIG. 1, the battery cell 120 has a thickness along the length direction of the casing 11, and the plurality of battery cells 120 are stacked along the length direction of the casing 11 to form one battery group 12. The strip-shaped exhaust hole 1121a extends along the length direction of the casing 11, or a plurality of exhaust holes 1121a are sequentially arranged along the length direction of the casing 11, with the height at which the exhaust hole 1121a is located lower than the height at which the first channel 1123 is located, and a plurality of exhaust holes 1121a are provided within a projection of one first channel 1123 along the height direction of the casing 11, or one strip-shaped exhaust hole 1121a is provided within a projection of one first channel 1123 along the height direction of the casing 11.

In some embodiments, unlike the solution where the battery cell 120 has a thickness along the length direction of the casing 11 and the plurality of battery cells 120 are stacked along the length direction of the casing 11, the battery cell 120 has a length along the width direction of the casing 11 and the plurality of battery cells 120 are sequentially arranged along the width direction of the casing 11 to form one battery group 12. The strip-shaped exhaust hole 1121a extends along the width direction of the casing 11, or a plurality of exhaust holes 1121a are sequentially arranged along the width direction of the casing 11, with the height at which the exhaust hole 1121a is located lower than the height at which the first channel 1123 is located, and a plurality of exhaust holes 1121a are provided within a projection of one first channel 1123 along the height direction of the casing 11, or one strip-shaped exhaust hole 1121a is provided within a projection of one first channel 1123 along the height direction of the casing 11.

In the case where the battery includes a plurality of battery groups 12, providing a plurality of first channels 1123, where one first channel 1123 can converge gas discharged from a plurality of valves of a plurality of battery cells 120 in one battery group 12, enables exhaustion for the plurality of battery groups 12.

In some embodiments, the channel structure includes a second channel 1124, the second channel 1124 extends along the second direction b, and the plurality of first channels 1123 all are in communication with the second channel 1124.

The second channel 1124 is a channel structure provided on the casing 11 and communicating with the first channel 1123, having a specific caliber to allow gas to pass through and a specific length to directionally guide the gas, with a large ratio of length to caliber. The second channel 1124 is configured to allow gas from a plurality of first channels 1123 to flow through.

The second channel 1124 converges gas from the plurality of first channels 1123 and guides the gas to be directionally discharged from the casing 11, facilitating directional control of the gas, reducing the likelihood of safety hazards, and minimizing the number of paths for gas discharge from the casing 11, thereby simplifying the structural design of the casing 11.

In some embodiments, as shown in FIG. 1, the battery cell 120 has a thickness along the length direction of the casing 11, and the plurality of battery cells 120 are stacked along the length direction of the casing 11, so the first channel 1123 extends along the length direction of the casing 11, and the second channel 1124 extends along the width direction of the casing 11.

In some embodiments, unlike the solution where the battery cell 120 has a thickness along the length direction of the casing 11 and the plurality of battery cells 120 are stacked along the length direction of the casing 11, the battery cell 120 has a length along the width direction of the casing 11 and the plurality of battery cells 120 are sequentially arranged along the width direction of the casing 11, so the first channel 1123 extends along the width direction of the casing 11, and the second channel 1124 extends along the length direction of the casing 11, with the second channel 1124 provided at the same end of the plurality of first channels 1123 along the width direction of the casing 11 and communicating with the plurality of first channels 1123.

In some embodiments, the channel structure includes a third channel 1125, the extension direction of the third channel 1125 is consistent with the axial direction c of the exhaust hole 1121a, an end of the third channel 1125 distant from the second channel 1124 is provided with a second pressure relief mechanism 14; and the second pressure relief mechanism 14 and the first pressure relief mechanism 122 are provided on the same side of the exhaust hole 1121a.

The third channel 1125 is a channel structure provided on the casing 11 and communicating with the second channel 1124, having a specific caliber to allow gas to pass through and a specific length to directionally guide the gas, with a length-to-caliber ratio approaching 1. The third channel 1125 is configured to allow gas from the second channel 1124 to flow through.

The third channel 1125 extends along the axial direction c of the exhaust hole 1121a, allowing the second pressure relief mechanism 14 and the first pressure relief mechanism 122 to be provided on the same side of the exhaust hole 1121a, such that the provision of the second pressure relief mechanism 14 does not increase the size of the casing 11 along the axial direction c of the exhaust hole 1121a, thereby not increasing the occupied volume of the casing 11.

For example, as shown in FIGs. 1, 7, and 8, the third channel 1125 may adopt a recessed groove structure, formed by stretching the second channel 1124 along the height direction, with the second pressure relief mechanism 14 installed at the bottom of the recessed groove.

The other end of the third channel 1125 is distant from the second channel 1124, meaning the position of the second pressure relief mechanism 14 is lower than the second channel 1124, and the provision of the second pressure relief mechanism 14 does not increase the size of the casing 11 along the second direction b, thereby not increasing the occupied volume of the casing 11. Furthermore, after convergence through the first channel 1123 and the second channel 1124, the gas is discharged through one second pressure relief mechanism 14, reducing the number of second pressure relief mechanisms 14 and lowering the manufacturing cost of the casing 11.

Certainly, in other embodiments, the second pressure relief mechanism 14 may be provided at the extension end of the first channel 1123 or at the extension end of the second channel 1124.

In some embodiments, the first channel 1123 and the third channel 1125 are provided on two sides of the second channel 1124 along the first direction a.

In some embodiments, as shown in FIG. 1, the first channel 1123 extends along the length direction of the casing 11, the second channel 1124 extends along the width direction of the casing 11, the third channel 1125 is provided at a central position of the second channel 1124, and the third channel 1125 is provided on a side of the second channel 1124 facing away from the first channel 1123. Alternatively, the third channel 1125 is provided at one end of the second channel 1124 along its length direction.

In some embodiments, the first channel 1123 extends along the width direction of the casing 11, the second channel 1124 extends along the length direction of the casing 11, the third channel 1125 is provided at a central position of the second channel 1124, and the third channel 1125 is provided on a side of the second channel 1124 facing away from the first channel 1123. Alternatively, the third channel 1125 is provided at one end of the second channel 1124 along its length direction.

Gas enters the first channel 1123 from the exhaust hole 1121a, enters the second channel 1124 from the first channel 1123, and enters the third channel 1125 from the second channel 1124, with the gas generally flowing along the first direction a and being discharged from one side of the first direction a from the casing 11, facilitating directional control of the gas and reducing the likelihood of safety hazards.

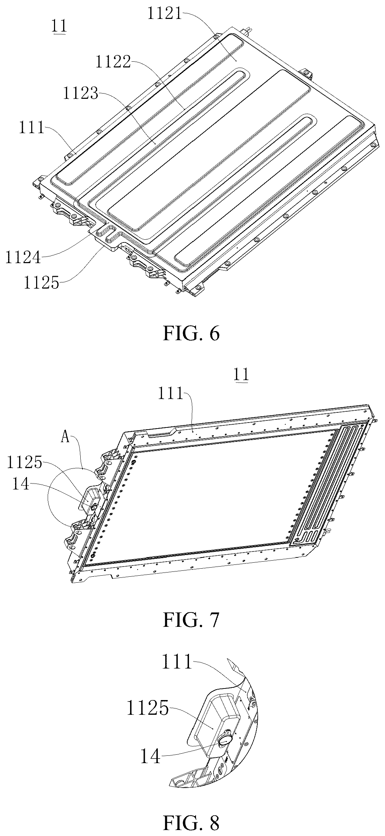

Referring to FIGs. 8 to 11, 14 to 16, and 21 to 23, in some embodiments, the casing 11 includes a main casing 111 and a cover 112, the cover 112 includes a main cover member 1121 and a sub-cover member 1122. The main cover member 1121 is provided on the main casing 111, the main cover member 1121 and the main casing 111 together define a space for accommodating the battery cell 120, and the exhaust hole 1121a and the third channel 1125 are provided on the main cover member 1121. The sub-cover member 1122 is disposed on a side of the main cover member 1121 facing away from the main casing 111, and the sub-cover member 1122 and the main cover member 1121 together define a first channel 1123 and a second channel 1124.

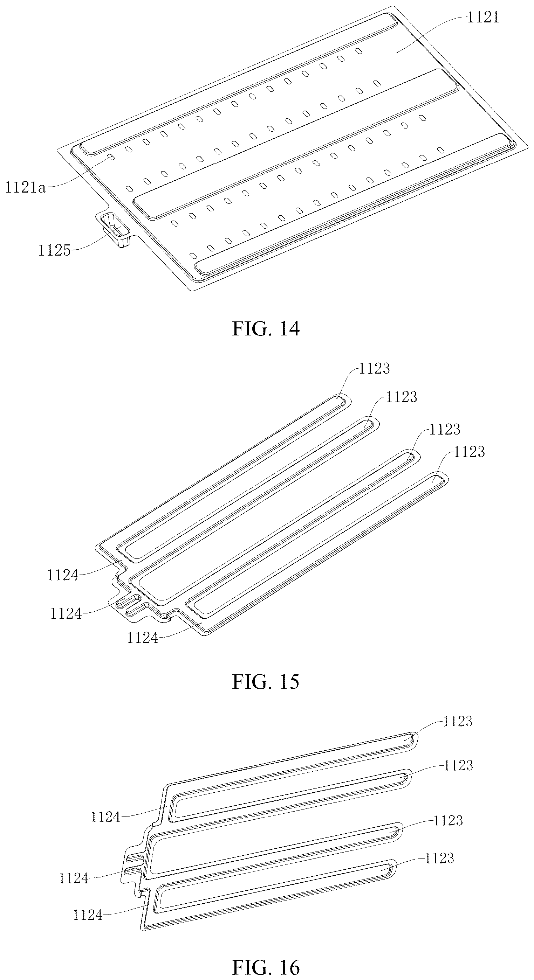

The casings provided in FIGs. 8 to 11 include but are not limited to being applicable to the batteries provided in FIGs. 3 and 4. The casings provided in Figures 14 to 16 include but are not limited to being applicable to the battery provided in FIG. 13. The casings provided in FIGs. 21 to 23 include but are not limited to being applicable to the batteries provided in FIGs. 17 and 19.

The main casing 111 is a component that has at least an accommodation space capable of accommodating the battery cell 120 and an opening allowing the battery cell 120 to enter or exit the accommodation space, and enables orderly arrangement of the plurality of battery cells 120, providing support, protection, heat dissipation, fire prevention, and explosion prevention. The main casing 111 may form the accommodation space by enclosing a plurality of casing walls, excluding the cover 112, from different sides, with the battery cell 120 accommodated in the accommodation space.

The cover 112 is a component that can be provided on the opening of the main casing 111 and is provided with the exhaust hole 1121a, the first channel 1123, the second channel 1124, and the third channel 1125. Generally, the cover 112 is a plate-like structure, having a specific thickness size and an extended area, with a large ratio of the extended area to the thickness size.

The main cover member 1121 is a part of the cover 112 that can be provided on the opening of the main casing 111 and is provided with the exhaust hole 1121a and the third channel 1125. The exhaust hole 1121a penetrates the main cover member 1121 along the thickness direction of the main cover member 1121, communicating the space where the first pressure relief mechanism 122 is located with the first channel 1123 located outside the exhaust hole 1121a.

The sub-cover member 1122 is another part of the cover 112 that can, together with the main cover member 1121, form the first channel 1123 and the second channel 1124. A portion of the sub-cover member 1122 aligns with the portion of the main cover member 1121 provided with the exhaust hole 1121a to form the first channel 1123, and another portion of the sub-cover member 1122 aligns with another portion of the main cover member 1121, avoiding the exhaust hole 1121a, to form the second channel 1124.

The main cover member 1121 and the sub-cover member 1122 may be integrally formed or connected by welding or adhesive bonding.

Integrally formed refers to a process of shaping a material body through deformation or extension to achieve a predetermined shape, or removing part of a material body to leave a predetermined shape, including but not limited to extending the same material or sequentially extending different materials, such as a process of stamping a blank material with a stamping machine to deform it into a predetermined shape, forging a blank material with forging tools to deform it into a predetermined shape, cutting a blank material with cutting equipment to remove part of the material and leave a portion with a predetermined shape, or casting a liquid material into a casting cavity matching the shape of the component and obtaining the component after cooling.

The process of casting a liquid material into a casting cavity matching the shape of the component to obtain the component may involve obtaining a complete component in a single cavity, where one or more materials may be cast in the cavity. Alternatively, a part of the component may be obtained in one cavity, then moved to another cavity to obtain another part of the component, and so on, with different parts of the complete component formed sequentially in different cavities, and the materials of different parts of the complete component may be the same or different.

Utilizing the main casing 111 and the cover 112 inherent to the casing 11 to design the first channel 1123, the second channel 1124, and the third channel 1125 simplifies the structural design of the casing 11.

Another objective of the embodiments of the present application is to provide an electric apparatus 100, where the electric apparatus 100 includes the battery 10 as described above.

The electric apparatus 100 provided by this technical solution employs the battery 10 provided by the above technical solution. In the battery 10 provided by the above technical solution, the exhaust hole 1121a on the casing 11 penetrates the casing 11 in the thickness direction thereof, the first pressure relief mechanism 122 in an open state is in communication with the exhaust hole 1121a, and gas discharged from the first pressure relief mechanism 122 is expelled from the casing 11 through the exhaust hole 1121a. This utilizes the external space of the casing 11 to cool and depressurize the gas, reducing or eliminating the risk of gas explosion inside the casing 11, thereby helping to improve the safety performance of the electric apparatus 100.

The above description merely represents preferred embodiments of the present application and is not intended to limit the present application. Any modifications, equivalent substitutions, and improvements made within the spirit and principles of the present application shall be included within the scope of protection of the present application.

## Claims

1. A battery, **characterized in that**:
the battery comprises a casing and a battery cell, the casing is provided with an exhaust hole penetrating the casing along a thickness direction of the casing, and the battery cell is accommodated in the casing;
the battery cell comprises a housing, and a first pressure relief mechanism and two electrodes that are provided on the housing, wherein the first pressure relief mechanism in an open state communicates the exhaust hole with an interior of the housing, and at least one of the two electrodes and the first pressure relief mechanism are provided on a same side of the housing;
the battery further comprises a separating member, wherein the separating member is connected between the casing and the battery cell to separate the first pressure relief mechanism from the electrode and to separate the exhaust hole from the electrode, the first pressure relief mechanism and the exhaust hole are provided on a same side of the separating member, and the electrode located on the same side as the first pressure relief mechanism is provided on another side of the separating member;
the casing is provided with a channel structure, the channel structure and the first pressure relief mechanism are provided on two sides of the exhaust hole along an axial direction thereof, and the exhaust hole is in communication with the channel structure;
the channel structure comprises a first channel, the first channel extends along the first direction , and the exhaust hole communicates the first channel with the first pressure relief mechanism;
the battery comprises a plurality of battery groups) arranged along a second direction, each battery group comprises a plurality of battery cells, the first direction is perpendicular to the second direction, the channel structure comprises a plurality of first channels), and the first channels) are provided in one-to-one correspondence to the battery groups);
the channel structure comprises a second channel, the second channel extends along the second direction, and the plurality of first channels) all are in communication with the second channel; and
the channel structure comprises a third channel, an extension direction of the third channel is consistent with the axial direction of the exhaust hole, an end of the third channel distant from the second channel is provided with a second pressure relief mechanism, and the second pressure relief mechanism and the first pressure relief mechanism are provided on a same side of the exhaust hole.

2. The battery according to claim 1, **characterized in that**:
the first pressure relief mechanism and the two electrodes are provided on a same side of the housing, the first pressure relief mechanism is provided between the two electrodes, the separating member is provided between the first pressure relief mechanism and one of the electrodes, and the separating member is provided between the first pressure relief mechanism and the other electrode.

3. The battery according to claim 2, **characterized in that**:
the first pressure relief mechanism is provided at a central position between the two electrodes.

4. The battery according to claim 2, **characterized in that**:
the first pressure relief mechanism is proximate to one of the electrodes and distant from the other electrode.

5. The battery according to claim 1, **characterized in that**:
the first pressure relief mechanism and the two electrodes are provided on a same side of the housing, the first pressure relief mechanism and the two electrodes are sequentially arranged, and the separating member is provided between the first pressure relief mechanism and the electrode adjacent thereto.

6. The battery according to claim 4 or 5, **characterized in that**:
the battery comprises a plurality of battery cells, the plurality of battery cells are stacked along the first direction, and any two adjacent battery cells are disposed opposite along the second direction, wherein the first direction is perpendicular to the second direction.

7. The battery according to claim 4 or 5, **characterized in that**:
the battery comprises a plurality of battery cells, the plurality of battery cells are stacked along a first direction, and any two adjacent battery cells are identically placed along a second direction, wherein the first direction is perpendicular to the second direction.

8. The battery according to any one of claims 2 to 5, **characterized in that**:
the battery comprises a plurality of battery cells, and the plurality of battery cells are stacked along the first direction; and
the separating member extends along the first direction, and the separating member is connected to the plurality of battery cells.

9. The battery according to any one of claims 1 to 5, **characterized in that**:
a spacing distance between the separating member and an electrode adjacent thereto is greater than or equal to 35 mm; and
a size of the separating member in a direction from the separating member to the electrode adjacent thereto is greater than or equal to 4 mm and less than or equal to the spacing distance between the separating member and the electrode adjacent thereto.

10. The battery according to claim 9, **characterized in that**:
a size of the separating member in a direction from the casing toward the battery cell is greater than or equal to 0.3 mm.

11. The battery according to claim 1, **characterized in that**:
the casing is provided with the second pressure relief mechanism, the second pressure relief mechanism is provided at an end of the channel structure distant from the exhaust hole, and the second pressure relief mechanism in an open state communicates the channel structure with an exterior of the casing.

12. The battery according to claim 1, **characterized in that**:
the battery comprises a plurality of battery cells stacked along the first direction, the casing is provided with a plurality of exhaust holes) arranged along the first direction, the plurality of exhaust holes) each are in communication with the channel structure, and the first pressure relief mechanisms) are provided in one-to-one correspondence to the exhaust holes).

13. The battery according to claim 1, **characterized in that**:
the battery comprises a plurality of battery cells stacked along the first direction, the exhaust hole extends along the first direction, and the plurality of first pressure relief mechanisms) of the plurality of battery cells are provided within a projection of the exhaust hole along its axial direction, wherein the first direction is perpendicular to the axial direction.

14. The battery according to claim 1, **characterized in that**:
the casing comprises a main casing and a cover, and the cover comprises a main cover member and a sub-cover member;
the main cover member is provided on the main casing, the main cover member and the main casing together define a space for accommodating the battery cell, and the exhaust hole and the third channel are provided on the main cover member; and
the sub-cover member is provided on a side of the main cover member facing away from the main casing, and the sub-cover member and the main cover member together define the first channel and the second channel.

15. An electric apparatus, **characterized in that**:
the electric apparatus comprises the battery according to any one of claims 1 to 14.
